# EUROPÄISCHE PATENTSCHRIFT

(11) **EP 4 367 434 B1**
(45) Veröffentlichungstag und Bekanntmachung des Hinweises auf die Patenterteilung: **03.06.2026**
(21) Anmeldenummer: 22732196.5
(22) Anmeldetag: 08.06.2022
(51) Int. Cl.: F21S 41/20, F21S 41/50, B62J 6/026, F21S 41/55, B62J 6/022

(54) **SCHEINWERFERVORRICHTUNG FÜR EIN NEIGEFAHRZEUG SOWIE NEIGEFAHRZEUG MIT EINER DERARTIGEN SCHEINWERFERVORRICHTUNG**
HEADLAMP DEVICE FOR A TILTING VEHICLE, AND TILTING VEHICLE COMPRISING SUCH A HEADLAMP DEVICE
DISPOSITIF DE PHARE POUR VÉHICULE INCLINABLE ET VÉHICULE INCLINABLE COMPRENANT UN TEL DISPOSITIF DE PHARE

(30) Priorität: 09.07.2021 DE 102021117738
(43) Veröffentlichungstag der Anmeldung: 15.05.2024
(73) Patentinhaber: Bayerische Motoren Werke Aktiengesellschaft, 80809 München (DE)
(72) Erfinder: PFEUFFER, Frederic, 85354 Freising (DE)
(86) Internationale Anmeldenummer: PCT/EP2022/065553
(87) Internationale Veröffentlichungsnummer: WO 2023/280502

(56) Entgegenhaltungen:
- EP-A1- 2 650 098
- EP-A1- 3 000 656
- WO-A1-2015/001823
- DE-A1- 102004 018 876
- DE-A1- 102011 015 012
- FR-A1- 2 765 665
- JP-A- 2016 115 631
- JP-A- 2016 134 266
- JP-A- 2017 030 262
- US-A- 5 546 284
- US-A1- 2019 154 223

## Beschreibung

Die Erfindung betrifft eine Scheinwerfervorrichtung mit den Merkmalen des Oberbegriffs des Anspruchs 1 sowie ein Neigefahrzeug mit einer derartigen Scheinwerfervorrichtung.

Scheinwerfervorrichtungen für Neigefahrzeuge sind in unterschiedlichen Ausführungsformen aus dem Stand der Technik bekannt. Hierbei wird von mindestens einem Leuchtmittel Licht ausgesandt, um beispielsweise den vor dem Neigefahrzeug angeordneten Straßenabschnitt zu beleuchten. Das Leuchtmittel ist einerseits von einer transparenten und/oder transluzenten Streuscheibe, durch die das Licht des Leuchtmittels nach außen treten kann, und andererseits durch ein Optikgehäuse in Gänze umschlossen.

Bei den bekannten Scheinwerfervorrichtungen ist im Optikgehäuse auf der dem Leuchtmittel zugewandten Oberfläche ein Reflektor angeordnet oder als Oberflächenabschnitt des Optikgehäuses ausgebildet. Dieser führt dazu, dass das vom Leuchtmittel ausgesandte Licht in eine Vielzahl von Richtungen gestreut wird. Hierbei kann es zu einem ungewollten Blenden weiterer Verkehrsteilnehmer oder des Nutzers des Neigefahrzeugs kommen.

Um ein ungewolltes Streuen von aus dem Leuchtmittel austretenden Lichts zu verhindern, ist es bekannt, durch das Aufkleben einer opaken Folie oder durch das Lackieren mit einem opaken Farbstoff, ein Blendenelement auszubilden. Da die Streuscheibe eine komplexe Geometrie umfassen kann, gestaltet sich bei den bekannten Scheinwerfervorrichtungen das Aufbringen des Blendenelements als umständlich. Hohe Anforderungen an Ästhetik und optischer Wirkung, führen zu einem erhöhten Montageaufwand und zu einem hohen Ausschuss von Bauteilen.

Gattungsgemäße Scheinwerfervorrichtungen sind bekannt aus DE 10 2004 018876 A1, US 2019/0154223 A1, JP 2017 030262 A, EP 2 650 098 A1, FR 2 765 665 A1 und DE 10 2011 015 012 A1.

Nicht gattungsgemäße Scheinwerfervorrichtungen, bei denen Optikelement und Blendenelement jeweils separate Bauteile umfassen, sind bekannt aus JP 2016 134 266 A und JP 2016 115 631 A.

Eine Aufgabe eines Ausführungsbeispiels der Erfindung ist, eine Scheinwerfervorrichtung vorzuschlagen, bei der auf einfache Weise eine Streulichtbeaufschlagung reduzierbar ist.

Diese Aufgabe wird gelöst durch eine Scheinwerfervorrichtung nach Anspruch 1, d.h. mit mindestens einem Optikgehäuse, das mindestens einen über eine Öffnung von außen zugänglichen Hohlraum umfasst, mit mindestens einem im Hohlraum des Optikgehäuses angeordneten Leuchtmittel, durch das elektromagnetische Wellen im sichtbaren und/oder unsichtbaren Bereich abstrahlbar sind, mit mindestens einer Abdeckeinheit, die die Öffnung des Optikgehäuses, insbesondere in Gänze, überfangend am Optikgehäuse festlegbar oder festgelegt ist, um den Hohlraum gemeinsam mit dem Optikgehäuse nach außen zu begrenzen, die mindestens ein transparentes und/oder transluzentes Optikelement umfasst, das dem Leuchtmittel optisch nachgeschaltet ist und das für die elektromagnetischen Wellen des Leuchtmittels optisch durchlässig ist, und die mindestens ein opakes Blendenelement umfasst, das für die elektromagnetischen Wellen des Leuchtmittels optisch undurchlässig ist, wobei die Abdeckeinheit ein aus Optikelement und Blendenelement gebildetes gemeinsames einstückiges Bauteil umfasst, und mit mindestens einer Zusatzblende, die als separates Bauteil gebildet ist und die lösbar am Blendenelement der Abdeckeinheit zum Optikelement berührungsfrei beabstandet festgelegt ist, wobei das Blendenelement der Abdeckeinheit auf der der Zusatzblende zugewandten Seite mindestens eine Aufnahme umfasst, in der die Zusatzblende mit einem Fügeabschnitt anordenbar und bezüglich der Abdeckeinheit ausrichtbar ist.

Dadurch, dass die Abdeckeinheit ein aus Optikelement und Blendenelement gebildetes gemeinsames einstückiges Bauteil umfasst, lässt sich das Blendenelement bezüglich Anordnung, Ausrichtung und Erstreckung verbessert an dem Optikelement anordnen. Hierdurch lassen sich klare Kanten auf einfache Weise bilden, wodurch ungewollte Streueffekte vereinfacht reduzierbar sind. Darüber hinaus ist ein nachgelagerter Bearbeitungsschritt zum Herstellen der Abdeckeinheit, nämlich das Aufkleben oder Lackieren des Blendenelements, einsparbar.

Dadurch, dass die Abdeckeinheit die Öffnung des Optikgehäuses insbesondere in Gänze überfängt, ist das Leuchtmittel in Gänze gegenüber Umwelteinflüssen abschirmbar. Hierdurch ist die Lebensdauer der Scheinwerfervorrichtung erhöht und die Gefahr eines Eindringens von Feuchtigkeit und Schmutz reduziert.

Dadurch, dass das Blendenelement der Abdeckeinheit, auf der der Zusatzblende zugewandten Seite mindestens eine Aufnahme umfasst, in der die Zusatzblende mit einem Fügeabschnitt anordenbar und bezüglich der Abdeckeinheit ausrichtbar ist, ist die Zusatzblende auf einfache Weise im Hohlraum anzuordnen und bezüglich der Abdeckeinheit zu positionieren und auszurichten.

Die von dem Leuchtmittel abgestrahlten elektromagnetischen Wellen können Licht im sichtbaren Bereich und/oder Infrarotstrahlung umfassen. Letztere kann ein Sensorsystem des Neigefahrzeugs funktional unterstützen.

Durch die Zusatzblende können optische Effekte schon vor dem Auftreffen der durch das Leuchtmittel entsandten elektromagnetischen Wellen auf die Abdeckeinheit beeinflusst werden.

Dadurch, dass die mindestens eine Zusatzblende zu dem Optikelement berührungsfrei beabstandet festlegbar oder festgelegt ist, lässt sich die Zusatzblende in unmittelbarer Nähe zum Leuchtmittel anordnen. Die Zusatzblende kann die Abdeckeinheit maskenartig überfangen und eines oder mehrere Lichtfenster freigeben.

Unter einem Neigefahrzeug werden Fahrräder, Motorräder oder motorradähnliche Kraftfahrzeuge, wie Motorroller, insbesondere zwei-, drei-oder vierrädrige Motorroller, Scooter, neigbare Trikes, Quads oder Dergleichen verstanden.

Die Abdeckeinheit lässt sich einfach und kostengünstig herstellen, wenn die Abdeckeinheit ein Mehrkomponenten-Spritzgussteil umfasst, insbesondere wenn das Optikelement einen transparenten und/oder transluzenten Kunststoff und wenn das Blendenelement einen opaken Kunststoff umfasst.

Dadurch, dass die Abdeckeinheit ein Mehrkomponenten-Spritzgussteil umfasst, lassen sich Optikelement und Blendenelement im Zuge eines Spritzgusses direkt beim Herstellungsprozess, also beim Einspritzen des Kunststoffes in die Spritzgussformen, optimal zueinander ausrichten und qualitativ hochwertige Kanten erzeugen. Hierdurch ist die optische Wirkung und Genauigkeit der Scheinwerfervorrichtung verbessert.

Der transparente und/oder transluzente Kunststoff und/oder der opake Kunststoff kann beispielsweise ein Polycarbonat (PC) umfassen.

Grundsätzlich ist es denkbar, dass die Abdeckeinheit lediglich eine Scheibe umfasst, die im Wesentlichen flach in einer Ebene verläuft. Bei Ausführungsformen der Scheinwerfervorrichtung wird es jedoch bevorzugt, wenn die Abdeckeinheit, insbesondere das transparente und/oder transluzente Optikelement, eine Freiformoptik umfasst.

Bei dem Ausformen der Abdeckeinheit als Freiformoptik lässt sich die optische Wirkung des transparenten und/oder transluzenten Optikelements weiter verbessern sowie ein optisch ansprechendes Äußeres herstellen. Ferner ist die Scheinwerfervorrichtung bezüglich Aerodynamik verbesserbar.

Beispielsweise kann das Optikelement in Gänze oder abschnittsweise ein Lichtaustrittsfenster umfassen, durch das elektromagnetische Wellen des Leuchtmittels im Wesentlichen ungehindert und ungebrochen hindurchtreten können. Darüber hinaus ist es denkbar, dass das Optikelement in Gänze oder abschnittsweise linsenartig, prismaartig oder reflektorartig wirkt, wodurch ein Umlenken der elektromagnetischen Wellen des Leuchtmittels ermöglicht ist.

Bei einer Ausführungsform der Scheinwerfervorrichtung ist vorgesehen, dass das transparente und/oder transluzente Optikelement die Öffnung des Optikgehäuses in Gänze überfängt und das das Blendenelement abschnittsweise und mindestens ein Sichtfenster bildend am Optikelement festgelegt ist.

Wenn das transparente und/oder transluzente Optikelement die Öffnung des Optikgehäuses in Gänze überfängt, kann in der am Optikgehäuse angeordneten Position der Abdeckeinheit der Hohlraum in Gänze durch das Optikelement umschlossen werden. Solchenfalls kann das transparente und/oder transluzente Optikelement die tragende Struktur der Abdeckeinheit bilden. Dadurch, dass das Blendenelement abschnittsweise und mindestens ein Sichtfenster bildend am Optikelement festgelegt ist, kann gewährleistet werden, dass ein Lichtaustritt des Leuchtmittels durch die Abdeckeinheit erfolgt.

Bei einer Weiterbildung letztgenannter Ausführungsform erweist es sich als vorteilhaft, wenn das Blendenelement zumindest an einem dem Optikgehäuse zugewandten Randabschnitt des Optikelements den Randabschnitt abschnittweise oder in Gänze umfangend angeordnet ist.

Hierdurch lassen sich Streueffekte in Richtung Fahrzeugfahrer auf einfache Weise unterbinden.

Darüber hinaus sind Ausführungsformen der Scheinwerfervorrichtung denkbar, bei denen das Blendenelement auf der dem Leuchtmittel zugewandten Seite oder bei denen das Blendenelement auf der dem Leuchtmittel abgewandten Seite des Optikelements angeordnet ist. Wenn das Blendenelement auf der dem Leuchtmittel zugewandten Seite des Optikelements angeordnet ist, lassen sich gegebenenfalls durch den Hindurchtritt durch das Optikelement einstellende Streuungen oder Ablenkungen der elektromagnetischen Wellen reduzieren. Wenn das Blendenelement auf der dem Leuchtmittel abgewandten Seite des Optikelements angeordnet ist, ist das Blendenelement besser vor einer Überhitzung durch das Leuchtmittel geschützt.

Insbesondere wenn das Blendenelement an einem dem Optikgehäuse zugewandten Randabschnitt des Optikelements und diesen in Gänze umfangend angeordnet ist, erweist es sich als vorteilhaft, wenn die Abdeckeinheit mit dem Blendenelement am Optikgehäuse anliegend am Optikgehäuse festlegbar oder festgelegt ist.

Das Optikelement kann solchenfalls einen Hartkunststoff umfassen, dessen optische Eigenschaften verbessert sind und der lediglich plastisch verformbar ist. Das Blendenelement kann einen elastischen Kunststoff umfassen und durch das Anliegen am Optikgehäuse eine dem Kunststoff immanent innenwohnende Dichtwirkung zwischen Abdeckeinheit und Optikgehäuse entfalten.

Die technische Wirkungsweise der Scheinwerfervorrichtung lässt sich weiter verbessern, wenn das Optikgehäuse mindestens ein Reflektorelement umfasst, das einen Abschnitt des Optikgehäuses umfasst und ein gemeinsames Bauteil mit dem Optikgehäuse bildet und/oder ein vom Optikgehäuse separates oder separierbares Bauteil umfasst, das lösbar oder unlösbar am Optikgehäuse festgelegt ist.

Darüber hinaus sind Ausführungsformen der Scheinwerfervorrichtung denkbar, bei denen mindestens ein Bereich des Optikelements der Abdeckeinheit und/oder des Blendenelements der Abdeckeinheit ein Reflektorelement bildet. Ferner ist es denkbar, dass Bereiche der Zusatzblende als Reflektorelement ausgebildet sind.

Schließlich wird die Aufgabe durch ein Neigefahrzeug mit einer Scheinwerfervorrichtung nach Anspruch 1 gelöst.

In der Zeichnung zeigt:

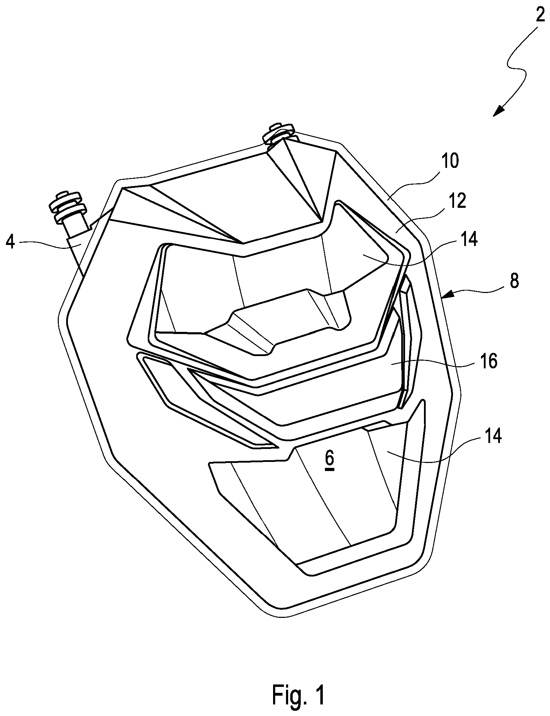

- Figur 1: Eine perspektivische Vorderansicht auf ein Ausführungsbeispiel der Scheinwerfervorrichtung;

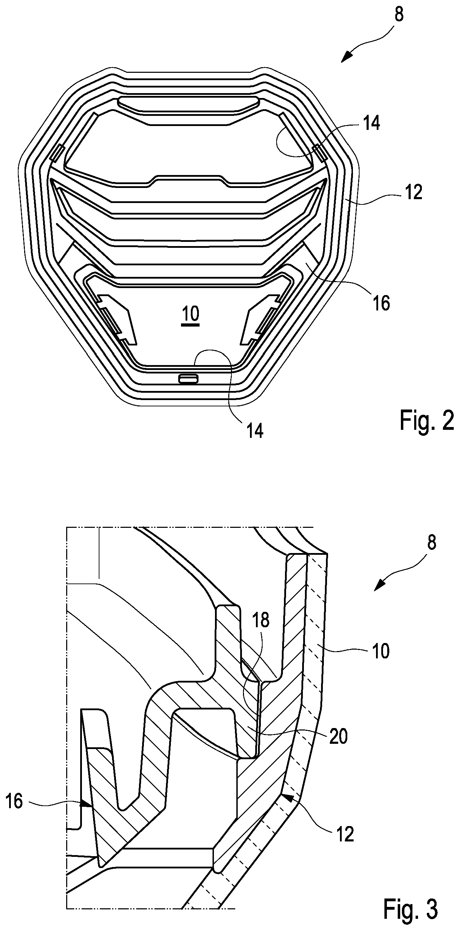

- Figur 2: Eine Rückansicht auf die Scheinwerfervorrichtung gemäß Figur 1 ;
- Figur 3: Eine Detailansicht einer Anordnung einer Zusatzblende an einem Blendenelement der Abdeckeinheit.

Die Figuren zeigen ein Ausführungsbeispiel einer insgesamt mit dem Bezugszeichen 2 versehenen Scheinwerfervorrichtung für ein Neigefahrzeug (in den Figuren nicht dargestellt). Die Scheinwerfervorrichtung 2 umfasst mindestens ein Optikgehäuse 4, das mindestens einen über eine Öffnung von außen zugänglichen Hohlraum 6 umfasst. In dem Hohlraum 6 des Optikgehäuses 4 ist ein Leuchtmittel angeordnet (in den Figuren nicht dargestellt). Das Leuchtmittel kann elektromagnetische Wellen im sichtbaren und/oder unsichtbaren Bereich abstrahlen, insbesondere Licht oder Infrarotstrahlung.

Darüber hinaus umfasst die Scheinwerfervorrichtung 2 eine Abdeckeinheit 8, die die Öffnung des Optikgehäuses 4 in Gänze überfangend am Optikgehäuse 4 festgelegt ist. Gemeinsam mit dem Optikgehäuse 4 begrenzt die Abdeckeinheit 8 den Hohlraum 6 nach außen in Gänze.

Die Abdeckeinheit 8 umfasst ein transparentes und/oder transluzentes Optikelement 10, das bei den in den Figuren gezeigten Ausführungsbeispiel die Öffnung des Optikgehäuses 4 in Gänze überfängt. Das Optikelement 10 ist dem Leuchtmittel optisch nachgeschaltet und für elektromagnetische Wellen des Leuchtmittels optisch durchlässig.

Darüber hinaus umfasst die Abdeckeinheit 8 ein opakes Blendenelement 12, das für die elektromagnetischen Wellen des Leuchtmittels optisch undurchlässig ist. Bei dem in den Figuren gezeigten Ausführungsbeispiel ist das Blendenelement 12 an einem dem Optikgehäuse 4 zugewandten Randabschnitt angeordnet, überfängt das Optikelement 10 abschnittsweise und bildet zwei Sichtfenster 14. Bei den in den Figuren gezeigten Ausführungsbeispiel der Scheinwerfervorrichtung 2 ist die Abdeckeinheit 8 durch ein aus Optikelement 10 und Blendenelement 12 gebildetes gemeinsames einstückiges Bauteil gebildet. Optikelement 10 und Blendenelement 12 umfassen hierbei mehrere Kunststoffkomponenten, die im Zuge eines Mehrkomponenten-Spritzgussverfahrens die Abdeckeinheit 8 bilden.

Die Figuren zeigen ein Ausführungsbeispiel der Scheinwerfervorrichtung 2, bei dem eine Zusatzblende 16 vorgesehen ist, die im Hohlraum 6 angeordnet ist und die als separates oder separierbares Bauteil ausgebildet ist. Die Zusatzblende 16 ist am Blendenelement 12 der Abdeckeinheit 8 festgelegt und zum Optikelement 10 berührungsfrei beabstandet.

Um die Zusatzblende 16 am Blendenelement 12 festzulegen, umfasst das Blendenelement 12 eine Aufnahme 18, in der die Zusatzblende 16 mit einem Fügeabschnitt 20 anordenbar und bezüglich der Abdeckeinheit 8 ausrichtbar ist.

### Bezugszeichenliste

- 2: Scheinwerfervorrichtung
- 4: Optikgehäuse
- 6: Hohlraum
- 8: Abdeckeinheit
- 10: Optikelement
- 12: Blendenelement
- 14: Sichtfenster
- 16: Zusatzblende
- 18: Aufnahme
- 20: Fügeabschnitt

## Patentansprüche

1. Scheinwerfervorrichtung (2) für ein Fahrzeug mit mindestens einem Optikgehäuse (4), das mindestens einen über eine Öffnung von außen zugänglichen Hohlraum (6) umfasst, mit mindestens einem im Hohlraum (6) des Optikgehäuses (4) angeordneten Leuchtmittel, durch das elektromagnetische Wellen im sichtbaren und/oder unsichtbaren Bereich abstrahlbar sind, mit mindestens einer Abdeckeinheit (8), die die Öffnung des Optikgehäuses (4), insbesondere in Gänze, überfangend am Optikgehäuse (4) festlegbar oder festgelegt ist, um den Hohlraum (6) gemeinsam mit dem Optikgehäuse (4) nach außen zu begrenzen, die mindestens ein transparentes und/oder transluzentes Optikelement (10) umfasst, das dem Leuchtmittel optisch nachgeschaltet ist und das für die elektromagnetischen Wellen des Leuchtmittels optisch durchlässig ist, und die mindestens ein opakes Blendenelement (12) umfasst, das für die elektromagnetischen Wellen des Leuchtmittels optisch undurchlässig ist, wobei die Abdeckeinheit (8) ein aus Optikelement (10) und Blendenelement (12) gebildetes gemeinsames einstückiges Bauteil umfasst, **gekennzeichnet durch** mindestens eine im Hohlraum (6) angeordnete Zusatzblende (16), die als separates Bauteil gebildet ist und die lösbar am Blendenelement (12) der Abdeckeinheit (8) zum Optikelement (10) berührungsfrei beabstandet festgelegt ist, wobei das Blendenelement (12) der Abdeckeinheit (8) auf der der Zusatzblende (16) zugewandten Seite mindestens eine Aufnahme (18) umfasst, in der die Zusatzblende (16) mit einem Fügeabschnitt (20) angeordnet und bezüglich der Abdeckeinheit (8) ausgerichtet ist.

2. Scheinwerfervorrichtung (2) nach Anspruch 1, **dadurch gekennzeichnet, dass** die Abdeckeinheit (8) ein Mehrkomponenten-Spritzgussteil umfasst, insbesondere dass das Optikelement (10) einen transparenten und/oder transluzenten Kunststoff und dass das Blendenelement (12) einen opaken Kunststoff umfasst.

3. Scheinwerfervorrichtung (2) nach Anspruch 1 oder 2, **dadurch gekennzeichnet, dass** die Abdeckeinheit (8), insbesondere das transparente und/oder transluzente Optikelement (10), eine Freiformoptik umfasst.

4. Scheinwerfervorrichtung (2) nach einem der vorhergehenden Ansprüche, **dadurch gekennzeichnet, dass** das transparente und/oder transluzente Optikelement (10) die Öffnung des Optikgehäuses (4) in Gänze überfängt und das das Blendenelement (12) abschnittsweise und mindestens ein Sichtfenster (14) bildend am Optikelement (10) festgelegt ist.

5. Scheinwerfervorrichtung (2) nach Anspruch 4, **dadurch gekennzeichnet, dass** das Blendenelement (12) zumindest an einen dem Optikgehäuse (4) zugewandten Randabschnitt des Optikelements (10) den Randabschnitt abschnittweise oder in Gänze umfangend angeordnet ist.

6. Scheinwerfervorrichtung (2) nach einem der vorhergehenden Ansprüche, **dadurch gekennzeichnet, dass** das Blendenelement (12) auf der dem Leuchtmittel zugewandten Seite oder auf der dem Leuchtmittel abgewandten Seite des Optikelements (10) angeordnet ist.

7. Scheinwerfervorrichtung (2) nach einem der vorhergehenden Ansprüche, **dadurch gekennzeichnet, dass** die Abdeckeinheit (8) mit dem Blendenelement (12) am Optikgehäuse (4) anliegend am Optikgehäuse (4) festlegbar oder festgelegt ist.

8. Neigefahrzeug mit einer Scheinwerfervorrichtung (2) nach einem der Ansprüche 1 bis 7.

## Claims

1. Headlight device (2) for a vehicle with at least one optical housing (4), which comprises at least one cavity (6) accessible from the outside via an opening, with at least one illuminant arranged in the cavity (6) of the optical housing (4), by means of which electromagnetic waves in the visible and/or invisible range can be emitted, with at least one cover unit (8), which can be fixed or is fixed to the optical housing (4) overlapping the opening of the optical housing (4), in particular in its entirety, in order to delimit the cavity (6) towards the outside together with the optical housing (4), which comprises at least one transparent and/or translucent optical element (10), which is optically arranged downstream of the illuminant and which is optically transmissive for the electromagnetic waves of the illuminant, and which comprises at least one opaque aperture element (12), which is optically impermeable for the electromagnetic waves of the illuminant, wherein the cover unit (8) comprises a common one-piece component formed from optical element (10) and aperture element (12), **characterized by** at least one additional aperture (16) arranged in the cavity (6), which is formed as a separate component and which is detachably fixed to the aperture element (12) of the cover unit (8) spaced apart from the optical element (10) without contact, wherein the aperture element (12) of the cover unit (8) comprises on the side facing the additional aperture (16) at least one receptacle (18), in which the additional aperture (16) is arranged with a joining section (20) and is aligned with respect to the cover unit (8).

2. Headlight device (2) according to claim 1, **characterized in that** the cover unit (8) comprises a multi-component injection-moulded part, in particular that the optical element (10) comprises a transparent and/or translucent plastic and that the aperture element (12) comprises an opaque plastic.

3. Headlight device (2) according to claim 1 or 2, **characterized in that** the cover unit (8), in particular the transparent and/or translucent optical element (10), comprises a free-form optical system.

4. Headlight device (2) according to one of the preceding claims, **characterized in that** the transparent and/or translucent optical element (10) overlaps the opening of the optical housing (4) in its entirety and that the aperture element (12) is fixed to the optical element (10) in sections and forming at least one viewing window (14).

5. Headlight device (2) according to claim 4, **characterized in that** the aperture element (12) is arranged at least on an edge section of the optical element (10) facing the optical housing (4), surrounding the edge section in sections or in its entirety.

6. Headlight device (2) according to one of the preceding claims, **characterized in that** the aperture element (12) is arranged on the side of the optical element (10) facing the illuminant or on the side of the optical element (10) facing away from the illuminant.

7. Headlight device (2) according to one of the preceding claims, **characterized in that** the cover unit (8) with the aperture element (12) can be fixed or is fixed to the optical housing (4) resting against the optical housing (4).

8. Tilting vehicle with a headlight device (2) according to one of claims 1 to 7.

## Revendications

1. Dispositif de projecteur (2) pour un véhicule avec au moins un boîtier optique (4), qui comprend au moins une cavité (6) accessible de l'extérieur par une ouverture, avec au moins un moyen d'éclairage disposé dans la cavité (6) du boîtier optique (4), au moyen duquel des ondes électromagnétiques dans le domaine visible et/ou invisible peuvent être émises, avec au moins une unité de couverture (8), qui peut être fixée ou est fixée au boîtier optique (4) en recouvrant l'ouverture du boîtier optique (4), en particulier dans son intégralité, afin de délimiter la cavité (6) vers l'extérieur conjointement avec le boîtier optique (4), qui comprend au moins un élément optique (10) transparent et/ou translucide, qui est disposé optiquement en aval du moyen d'éclairage et qui est optiquement perméable aux ondes électromagnétiques du moyen d'éclairage, et qui comprend au moins un élément de diaphragme (12) opaque, qui est optiquement imperméable aux ondes électromagnétiques du moyen d'éclairage, dans lequel l'unité de couverture (8) comprend un composant monobloc commun formé de l'élément optique (10) et de l'élément de diaphragme (12), **caractérisé par** au moins un diaphragme additionnel (16) disposé dans la cavité (6), qui est formé comme un composant séparé et qui est fixé de manière détachable à l'élément de diaphragme (12) de l'unité de couverture (8) à distance de l'élément optique (10) sans contact, dans lequel l'élément de diaphragme (12) de l'unité de couverture (8) comprend sur le côté orienté vers le diaphragme additionnel (16) au moins un logement (18), dans lequel le diaphragme additionnel (16) est disposé avec une section d'assemblage (20) et est aligné par rapport à l'unité de couverture (8).

2. Dispositif de projecteur (2) selon la revendication 1, **caractérisé en ce que** l'unité de couverture (8) comprend une pièce moulée par injection multicomposants, en particulier **en ce que** l'élément optique (10) comprend une matière plastique transparente et/ou translucide et **en ce que** l'élément de diaphragme (12) comprend une matière plastique opaque.

3. Dispositif de projecteur (2) selon la revendication 1 ou 2, **caractérisé en ce que** l'unité de couverture (8), en particulier l'élément optique (10) transparent et/ou translucide, comprend une optique à forme libre.

4. Dispositif de projecteur (2) selon l'une des revendications précédentes, **caractérisé en ce que** l'élément optique (10) transparent et/ou translucide recouvre l'ouverture du boîtier optique (4) dans son intégralité et **en ce que** l'élément de diaphragme (12) est fixé à l'élément optique (10) par sections et en formant au moins une fenêtre de visualisation (14).

5. Dispositif de projecteur (2) selon la revendication 4, **caractérisé en ce que** l'élément de diaphragme (12) est disposé au moins sur une section de bord de l'élément optique (10) orientée vers le boîtier optique (4), en entourant la section de bord par sections ou dans son intégralité.

6. Dispositif de projecteur (2) selon l'une des revendications précédentes, **caractérisé en ce que** l'élément de diaphragme (12) est disposé sur le côté de l'élément optique (10) orienté vers le moyen d'éclairage ou sur le côté de l'élément optique (10) opposé au moyen d'éclairage.

7. Dispositif de projecteur (2) selon l'une des revendications précédentes, **caractérisé en ce que** l'unité de couverture (8) avec l'élément de diaphragme (12) peut être fixée ou est fixée au boîtier optique (4) en reposant contre le boîtier optique (4).

8. Véhicule inclinable avec un dispositif de projecteur (2) selon l'une des revendications 1 à 7.
